# FASCICULE DE BREVET EUROPEEN

(11) **EP 1 902 574 B1**
(45) Date de publication et mention de la délivrance du brevet: **02.12.2015**
(21) Numéro de dépôt: 06779051.9
(22) Date de dépôt: 12.07.2006
(51) Int. Cl.: H04M 1/73, H04B 1/16, G04G 19/12

(54) **TERMINAL MOBILE EQUIPE D'UNE ALIMENTATION AUTOMATIQUE**
MIT AUTOMATISCHER STROMVERSORGUNG AUSGESTATTETES MOBILES ENDGERÄT
MOBILE TERMINAL EQUIPPED WITH AUTOMATIC POWER SUPPLY

(30) Priorité: 13.07.2005 FR 0552185
(43) Date de publication de la demande: 26.03.2008
(73) Titulaire: Orange, 75015 Paris (FR)
(72) Inventeur: BOURLIATAUD, Christian, F-78370 Plaisir (FR); CHANTEAU, Gilles, F-98713 Papeete (FR)
(86) Numéro de dépôt international: PCT/FR2006/050715
(87) Numéro de publication internationale: WO 2007/007016

(56) Documents cités:
- EP-A- 0 812 119
- EP-A- 0 833 537
- EP-A- 0 952 500
- WO-A-2005/081565

## Description

La présente invention concerne un terminal mobile.

L'invention trouve une application avantageuse dans le domaine des terminaux mobiles, tels que les téléphones mobiles ou les assistants personnels (PDA), et plus spécialement dans le domaine des terminaux mobiles équipés d'une interface radio notamment destinée à détecter la présence d'un réseau radio de communication mobile.

D'une manière générale, les terminaux mobiles utilisent une batterie embarquée pour alimenter les composants nécessaires à leur fonctionnement et à la réalisation des services qu'ils sont censés offrir à leurs utilisateurs.

Cependant, ce mode d'alimentation électrique n'est pas totalement satisfaisant du fait de l'autonomie relativement faible des batteries utilisées dans les terminaux mobiles, et également du fait de l'augmentation croissante du nombre de composants dont certains, comme ceux par exemple associés à la recherche d'un réseau radio, prennent une part importante dans le bilan global de consommation d'énergie électrique des terminaux.

Une solution partielle à cet inconvénient consiste à mettre en veille les terminaux lorsque, bien qu'étant allumés, ils ne sont pas en fonctionnement. Cette mise en veille est le plus souvent effectuée après un délai de temporisation. Le passage du mode veille au mode actif nécessite alors une action sur le terminal, ce qui représente une contrainte pour l'utilisateur du terminal mobile.

Aussi, un problème technique à résoudre par l'objet de la présente invention est de proposer un terminal mobile qui serait équipé d'un système d'alimentation électrique permettant de n'alimenter les composants dudit terminal mobile, notamment ceux dont la consommation en énergie est élevée, qu'en situation de mobilité, sans intervention de son utilisateur et lorsqu'une condition particulière est remplie.

Le document brevet EP 0 833 537 A2 décrit un téléphone mobile comprenant : un circuit de communication radio ayant une antenne pour recevoir un signal d'onde radio et pour émettre un signal de réception ; un circuit de jugement pour juger, en réponse au signal de réception, si le téléphone mobile est à l'intérieur ou à l'extérieur d'une zone de service ; un circuit de détection pour détecter si le dispositif de téléphone mobile est dans un état mobile ou un état statique ; une alimentation pour fournir une alimentation au circuit de communication radio ; et un circuit de commande pour, en réponse au circuit de jugement et au circuit de détection, arrêter la fourniture de puissance au circuit de communication radio lorsque le téléphone mobile est en dehors de la zone de service et dans l'état statique.

Le document brevet EP 0 952 500 A1 décrit un appareil électronique portable pouvant passer en mode « économie d'énergie » lorsqu'un détecteur de l'appareil détecte que l'appareil n'est plus porté par un utilisateur.

Une solution au problème technique susmentionné consiste, selon la présente invention, en un terminal mobile tel que défini par les revendications 1 à 8.

Un tel terminal comporte des moyens d'alimentation automatique d'au moins un composant dudit terminal, ladite alimentation automatique étant commandée par des moyens de détection de mouvements dudit terminal.

Ainsi, ledit composant peut passer automatiquement du mode veille au mode actif dès que la situation de mobilité du terminal est établie suite à la détection d'un mouvement du terminal.

Il faut également noter un avantage de l'invention qui consiste dans le caractère réversible de la mise sous tension du composant, celle-ci étant interrompue tout aussi automatiquement lorsqu'aucun mouvement du terminal n'est plus détecté.

Selon un premier mode de réalisation de l'invention, lesdits moyens d'alimentation automatique comprennent une batterie apte à être connectée audit composant par lesdits moyens de détection de mouvements du terminal.

De manière avantageuse, ladite batterie est une batterie d'alimentation du terminal.

Deux modes de mise en oeuvre de ce premier mode de réalisation peuvent être envisagés.

Selon une première mise en oeuvre, lesdits moyens de détection de mouvement comprennent un détecteur de vibrations alimenté par ladite batterie.

Selon une deuxième mise en oeuvre, lesdits moyens de détection de mouvement comprennent un détecteur de vibrations autonome. Cette dernière solution présente l'avantage sur la précédente de ne pas utiliser la batterie du terminal pour alimenter le détecteur de vibrations, d'où une économise d'énergie même si la consommation du détecteur alimenté par la batterie est très faible.

En particulier, ledit détecteur de vibrations autonome est un générateur électrique sur vibrations.

Selon un deuxième mode de réalisation de l'invention, lesdits moyens d'alimentation automatique sont constitués par un générateur électrique sur vibrations. Dans ce cas, ledit générateur exerce à la fois les fonctions de détection de vibrations et d'alimentation électrique du composant.

L'invention s'applique particulièrement bien aux terminaux mobiles disposant d'une interface radio avec un réseau radio de téléphonie mobile.

On sait en effet que les téléphones mobiles et les assistants personnels munis d'une interface radio, de type WiFi ou Bluetooth par exemple, ne détectent pas automatiquement la présence d'un réseau radio. Il faut pour cela que l'utilisateur active de manière logicielle l'interface radio de son terminal. Charge ensuite au terminal de balayer le réseau radio Wifi ou Bluetooth et de s'y connecter. Le passage d'une session GPRS à une session radio ne se fait donc pas automatiquement sur détection d'un réseau radio.

Il est bien sûr possible de laisser l'interface radio constamment allumée afin d'effectuer un balayage radio permanent, mais, compte tenu de la consommation importante de l'interface radio, la batterie du terminal mobile s'épuiserait alors en quelques heures, rendant impossible la fourniture de services en situation de mobilité.

Une autre solution consisterait pour l'utilisateur à activer ou désactiver lui-même l'interface radio de son terminal. Cela suppose toutefois qu'il sache s'il rentre ou sort d'une zone de couverture radio, ce qui n'est en général pas le cas. Par ailleurs, ce passage d'un mode à l'autre exigerait une intervention de l'utilisateur, ce que l'invention cherche précisément à éviter.

Il serait également possible d'ajouter un élément externe de positionnement du terminal, tel qu'un système GPS ou de triangulation GSM par exemple, afin de pouvoir activer l'interface radio lorsque l'élément de positionnement indique que le terminal mobile rentre dans une zone de couverture radio. Ce procédé présente cependant plusieurs inconvénients :
- le positionnement GPS est précis mais il nécessite d'être en milieu extérieur afin de mieux capter les ondes satellites. Le dispositif ne fonctionnerait plus ou moins bien en intérieur.
- le système GPS consomme également de l'énergie, ce qui réduit considérablement l'autonomie de la batterie.
- le positionnement par triangulation GSM n'est pas très précis (50 à 500 m en milieu urbain pour des zones radio de couverture variant de 20 à 200 m de diamètre) et consommateur d'énergie.

C'est pour remédier à ces inconvénients que l'invention prévoit que ledit composant est un détecteur d'ondes radio-fréquence destiné à commander une interface radio du terminal.

On obtient de cette manière une activation automatique de l'interface radio du terminal mobile lorsque ce dernier se trouve dans une zone de couverture radio dont la présence est signalée par ledit détecteur d'ondes radio-fréquence. Inversement, l'interface radio est remise en veille en sortie de la zone de couverture.

L'invention concerne également, en tant qu'application particulièrement avantageuse, un système de télécommunication incluant un réseau de communication muni d'au moins un point d'accès radio apte à communiquer avec au moins un terminal mobile conforme à la description qui précède.

La description qui va suivre en regard des dessins annexés, donnés à titre d'exemples non limitatifs, fera bien comprendre en quoi consiste l'invention et comment elle peut être réalisée.

La figure 1 est un schéma d'un terminal mobile équipé d'un système d'alimentation automatique selon un premier mode de réalisation.

La figure 2 est un schéma d'un terminal mobile équipé d'un système d'alimentation automatique selon un deuxième mode de réalisation.

La figure 3 est un schéma d'un premier mode de réalisation d'un terminal mobile équipé d'un détecteur d'ondes radio-fréquence.

La figure 4 est un schéma d'un deuxième mode de réalisation d'un terminal mobile équipé d'un détecteur d'ondes radio-fréquence.

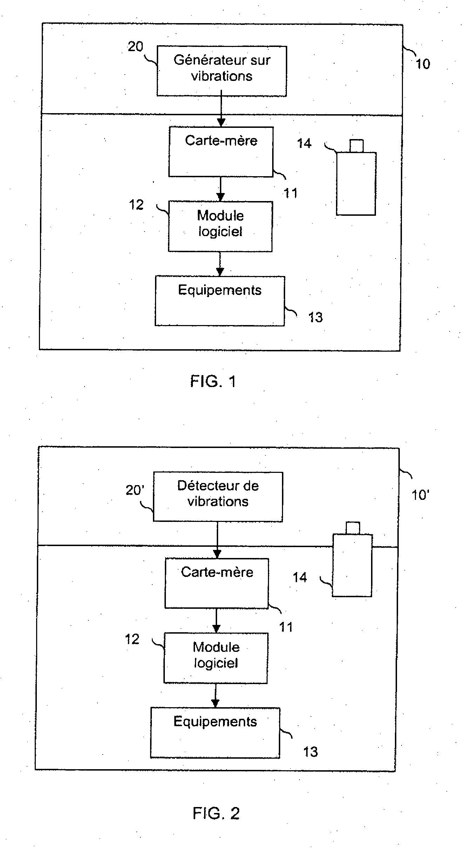

Sur la figure 1 est représenté un terminal mobile 10 comprenant divers composants connus en soi, à savoir:
- une carte-mère 11 hébergeant l'ensemble des circuits nécessaires au fonctionnement du terminal 10,
- un module logiciel 12 comprenant les applications destinées à fournir à l'utilisateur les services prévus dans son terminal 10,
- un ou plusieurs équipements 13 permettant d'assurer diverses fonctionnalités, telles que l'interfaçage avec un réseau radio.

Tous ces composants sont alimentés en énergie par une batterie 14. Lorsqu'ils sont en veille, c'est à dire hors activité, ils consomment très peu d'énergie.

Comme le montre la figure 1, le terminal mobile 10 comprend également un moyen d'alimentation automatique d'au moins un desdits composants sur détection de mouvements du terminal 10. Dans le mode de réalisation de la figure 1, ces moyens d'alimentation sont constitués par un générateur électrique 20 sur vibrations, apte à transformer une énergie vibratoire en énergie électrique. Ledit générateur électrique 20 est autonome en ce sens qu'il n'est pas alimenté électriquement par la batterie 14 du terminal. Il est situé dans le terminal 10 ou sur une carte d'extension de type SD ou CompactFlash insérée dans le terminal 10.

De tels générateurs sur vibrations sont décrits dans l'article de R. Amirtharajah et A. P. Chandrakasan, « Self-Powered Signal Processing Using Vibration-Based Power Generation », IEEE Journal of Solid-State Circuits, Vol. 33, N°. 5, May 1998, et dans la divulgation de M. A. Cohen, « Micro Generator Powered by Ambient Vibration », UCB Case N° : B04-046, University of Berkeley, California.

En présence de vibrations, c'est-à-dire lorsque le terminal 10 est en situation de mobilité, le générateur 20 fait passer la carte-mère 11 du mode veille à un mode dans lequel elle active le module logiciel 12 qui, à son tour, active un ou plusieurs équipements 13 du terminal 10, en particulier une interface radio, comme cela sera décrit en détail plus loin.

Si le terminal est éteint, ce processus n'est pas opérationnel, il le devient uniquement lorsque le terminal est en mode veille ou en mode allumé.

Si le terminal 10 est en veille, le ou les équipements 13 sont désactivés et leur consommation en énergie est faible. L'état de veille dure tant que le terminal 10 n'est pas en mouvement ou que l'utilisateur n'a pas activé de fonctions.

Lorsque le terminal 10 est en mouvement, le générateur électrique 20 sur vibrations produit un courant suffisant pour envoyer un signal de détection de mouvements à la carte-mère 11 du terminal 10.

Sur réception de ce signal, la batterie 14 fournit aux divers composants du terminal 10 l'énergie électrique d'alimentation dont ils ont besoin dans leur état actif. La carte-mère 11 sort de son état de veille et sollicite le module logiciel 12 afin d'activer de manière appropriée le ou les équipements 13 du terminal 10.

La ou les applications logicielles ainsi sollicitées supervisent le ou les équipements 13 et décident de leur fin d'activation.

Lorsque le ou les équipements 13 sont désactivés, l'application correspondante fait repasser le terminal 10 en mode veille. Tous les composants 11, 12, 13 alimentés par la batterie 14 du terminal 10 sont alors mis en sommeil, alimentation coupée.

Si le terminal 10 est allumé, donc en cours d'utilisation, le ou les équipements 13 peuvent être activés soit directement à l'initiative de l'utilisateur en fonction de ses besoins, soit automatiquement sur détection de mouvements.

Supposons que le terminal 10 soit allumé et que le ou les équipements 13 ne soient pas actifs.

Si le terminal 10 n'est pas en mouvement, rien ne se produit en ce qui concerne l'activation de ce ou ces équipements.

Si le terminal 10 est en mouvement, le mécanisme précédemment décrit dans le cas d'un terminal initialement en veille se reproduit, à savoir que le générateur électrique 20 sur vibrations produit un courant suffisant pour envoyer un signal de détection de mouvement à la carte-mère 11 du terminal 10.

Sur réception de ce signal, la batterie 14 fournit aux divers composants du terminal 10 l'énergie électrique d'alimentation dont ils ont besoin dans leur état actif. La carte-mère 11 sort de son état de veille et sollicite le module logiciel 12 afin d'activer de manière appropriée le ou les équipements 13 du terminal 10.

La ou les applications logicielles ainsi sollicitées supervisent le ou les équipements 13 et décident leur fin d'activation.

Lorsque le ou les équipements 13 sont désactivés, la ou les applications correspondantes se mettent en veille ou reviennent à leur état initial.

Le terminal 10 reste cependant à l'état actif. Il passera en mode veille sur commande de l'utilisateur ou après temporisation et en fonction de la politique de mise à l'état de veille définie par l'utilisateur par paramétrage.

Lorsque le terminal 10 est en mode veille, tous les composants 11, 12, 13 alimentés sur la batterie 14 du terminal sont mis en sommeil, avec une consommation en énergie faible.

La figure 2 se distingue de la figure 1 par le fait que la détection de mouvements n'est pas réalisée par un générateur électrique sur vibrations mais par un détecteur 20' de vibrations. Ce type de détecteurs est disponible dans le commerce, notamment dans le catalogue Conrad (www.conrad.fr) sous la référence B200 et dans le catalogue Selectronic (www.selectronic.fr) sous la référence 801.

Contrairement au générateur 20 sur vibrations, le détecteur 20' de vibrations nécessite d'être alimenté électriquement, en particulier par la batterie 14 du terminal 10.

Le fonctionnement du terminal 10' de la figure 2 est identique à celui qui vient d'être décrit en regard de la figure 1, le signal de détection de mouvements étant fourni cette fois à la carte-mère 11 par ledit détecteur 20' de vibrations.

En résumé, les modes de réalisation des figures 1 et 2 permettent d'activer automatiquement des fonctions du terminal lorsque celui-ci est :
- en utilisation et donc en mouvement, pris dans la main de l'utilisateur par exemple,
- en situation de mobilité, dans la poche de l'utilisateur lorsqu'il se déplace.

L'invention a donc l'avantage de permettre d'activer automatiquement des fonctions utiles, uniquement en utilisation ou mobilité, conduisant ainsi à une économie d'énergie par la mise en vielle automatique de ces fonctions le reste du temps, lorsque le terminal est immobile, posé sur une table par exemple.

La détection de l'utilisation ou de la mobilité du terminal se fait sans consommer l'énergie du terminal dans le cas du générateur 20 sur vibrations, ou avec une consommation très faible dans le cas du détecteur 20' de vibrations.

Le terminal n'est réveillé que lorsque qu'il est en utilisation.

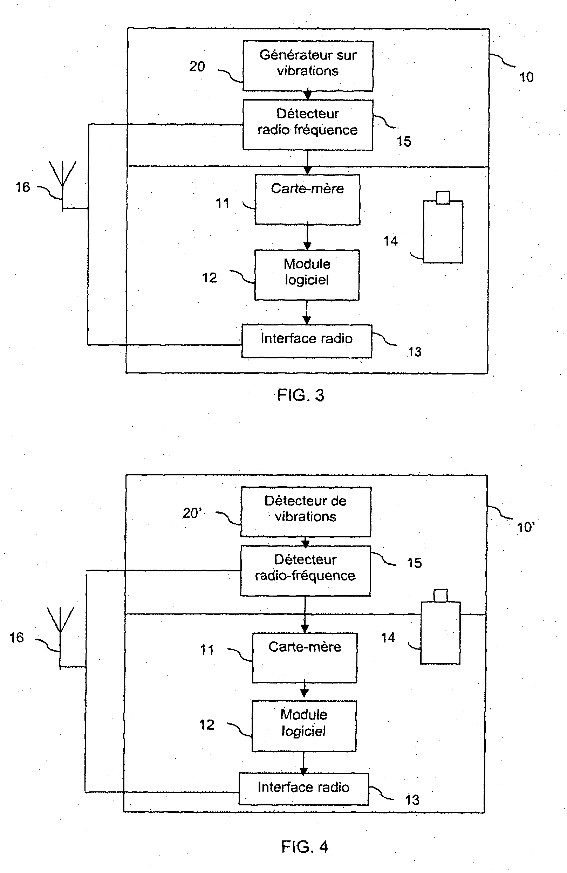

Les figures 3 et 4 montrent une application de l'invention à un terminal 10 équipé d'une interface radio 13 permettant audit terminal de se connecter à un réseau radio de fréquence F, réseau WiFi ou Bluetooth notamment.

Le terminal mobile 10 de la figure 3 comprend divers composants connus en soi, à savoir :
- une carte-mère 11 hébergeant l'ensemble des circuits nécessaires au fonctionnement du terminal 10,
- un module logiciel 12 comprenant les applications destinées à fournir à l'utilisateur les services prévus dans son terminal 10,
- l'interface radio 13,
- un détecteur 15 d'ondes radio à la fréquence F destiné à commander ladite interface radio 13,
- une antenne 16 permettant d'amplifier à destination du détecteur 15 d'ondes radio et de l'interface 13 le signal reçu d'une borne radio.

Un détecteur d'ondes radio-fréquence pouvant convenir à l'invention est distribué par la société Linear Technology Corporation sous la référence générale LTC5505-X.

Tous ces composants, sauf l'antenne 16 et le détecteur 15 d'ondes radio, sont alimentés en énergie par une batterie 14. Lorsqu' ils sont en veille, c'est dire hors activité, ils consomment très peu d'énergie.

Comme le montre la figure 3, le terminal mobile 10 comprend également un moyen d'alimentation automatique du détecteur 15 d'ondes radio sur détection de mouvements du terminal 10. Dans le mode de réalisation de la figure 3, ces moyens d'alimentation sont constitués par un générateur électrique 20 sur vibrations, du même type que celui décrit en référence à la figure 1, apte à transformer une énergie vibratoire en énergie électrique. Ledit générateur électrique 20 est autonome en ce sens qu'il n'est pas alimenté électriquement par la batterie 14 du terminal. Il est situé dans le terminal 10 ou sur une carte d'extension de type SD ou CompactFlash insérée dans le terminal 10.

Le détecteur 15 d'ondes radio est connecté à la carte-mère 11 du terminal 10.

En présence de vibrations, c'est-à-dire lorsque le terminal 10 est en situation de mobilité, le générateur 20 alimente le détecteur 15 d'ondes radio qui, sur détection d'une onde radio à la fréquence F, fait passer la carte-mère 11 du mode veille à un mode dans lequel elle active le module logiciel 12 lequel, à son tour, active l'interface radio 13 du terminal 10.

Si le terminal 10 est éteint, ce processus n'est pas opérationnel, il le devient uniquement lorsque le terminal est en mode veille ou en mode allumé.

Si le terminal 10 est en veille, l'interface radio 13 est désactivée et sa consommation en énergie est faible. L'état de veille dure tant que le terminal 10 n'est pas en mouvement ou que l'utilisateur n'a pas activé de fonctions.

Lorsque le terminal 10 est en mouvement, le générateur électrique 20 sur vibrations produit un courant permettant d'alimenter et d'activer le détecteur 15 d'ondes radio calé sur la fréquence F. S'il détecte un champ électromagnétique de fréquence F, un signal est envoyé à la carte-mère 11 du terminal 10.

Sur réception de ce signal, la carte-mère 11 sort de son état de veille et sollicite le module logiciel 12 afin d'activer de manière appropriée l'interface radio 13. du terminal 10. La connexion au réseau radio correspondant à la fréquence F détectée est alors effectuée.

A partir du moment où l'application logicielle de traitement des données sur le lien radio est opérationnelle, celle-ci va pouvoir recevoir et émettre des données radio sur le lien radio ainsi établi.

L'application logicielle supervise l'interface radio 13 et détecte la perte de la connexion radio en sortie de la zone de couverture

Lorsque la connexion radio est perdue, l'application désactive, après temporisation, l'interface radio 13 et met le terminal en mode veille. Tous les composants alimentés par la batterie 14 du terminal 10 sont alors mis en sommeil.

Si le terminal 10 est allumé, donc en cours d'utilisation, l'interface radio 13 peut être activée soit directement à l'initiative de l'utilisateur, soit automatiquement sur détection de mouvements.

Supposons que le terminal 10 soit allumé et que l'interface radio 13 ne soit pas active.

Si le terminal 10 n'est pas en mouvement, rien ne se produit en ce qui concerne l'activation de l'interface radio 13.

Si le terminal 10 est en mouvement, le mécanisme précédemment décrit dans le cas d'un terminal initialement en veille se reproduit, à savoir que le générateur électrique 20 sur vibrations produit un courant suffisant permettant d'alimenter et d'activer le détecteur 15 d'ondes radio calé sur la fréquence F. S'il détecte un champ électromagnétique de fréquence F, un signal est envoyé à la carte-mère 11 du terminal 10.

Sur réception de ce signal, la carte-mère 11 sort de son état de veille et sollicite le module logiciel 12 afin d'activer de manière appropriée l'interface radio 13 du terminal 10. La connexion au réseau radio correspondant à la fréquence F détectée est alors effectuée.

A partir du moment où l'application logicielle de traitement des données sur le lien radio est opérationnelle, celle-ci va pouvoir recevoir et émettre des données radio sur le lien radio ainsi établi.

L'application logicielle supervise l'interface radio 13 et détecte la perte de la connexion radio en sortie de la zone de couverture

Lorsque la connexion radio est perdue, l'application désactive l'interface radio 13, après temporisation. L'application se met en veille ou revient à son état initial

Le terminal 10 reste cependant à l'état actif. Il passera en mode veille sur commande de l'utilisateur ou après temporisation et en fonction de la politique de mise à l'état de veille définie par l'utilisateur par paramétrage.

Lorsque le terminal 10 est en mode veille, tous les composants 11, 12, 13 alimentés sur la batterie 14 du terminal sont mis en sommeil, avec une consommation en énergie faible.

Le mode de réalisation de la figure 3 a donc l'avantage de détecter des réseaux sans fils de fréquence F en mobilité sans consommer l'énergie du terminal et sans intervention de l'utilisateur.

L'énergie consommée pour la détection d'un réseau radio provient uniquement du générateur électrique 20 sur vibrations et aucune consommation d'énergie au niveau terminal 10 n'est nécessaire.

Le terminal n'est réveillé que lorsque le réseau radio est détecté.

Si le terminal 10 est en mode veille au moment de la détection d'une onde radio de fréquence F, seules les fonctions essentielles pour assurer le service, à savoir l'interface radio, sont activées au moment de la détection radio et désactivées sur perte de la connectivité radio. L'affichage du terminal 10 n'est pas activé afin de minimiser la consommation d'énergie.

Si le terminal est allumé et utilisé par l'opérateur au moment de la détection radio, celui-ci est laissé dans l'état sur perte de la connexion radio. La mise en veille se fera à l'initiative de l'utilisateur ou sur temporisation paramétrée.

La figure 4 se distingue de la figure 3 par le fait que la détection de mouvements n'est pas réalisée par un générateur électrique sur vibrations mais par un détecteur 20' de vibrations, du même type que celui décrit en regard de la figure 2. Le détecteur 20' de vibrations est alimenté en permanence par la batterie 14 du terminal 10', tandis que le détecteur 15 d'ondes radio à la fréquence F n'est alimenté par la batterie 14 que sur détection de mouvements du terminal 10' par le détecteur 20' de vibrations.

Le fonctionnement du terminal 10' de la figure 4 est identique à celui qui vient d'être décrit en regard de la figure 3, le signal de détection d'ondes radio étant fourni cette fois à la carte-mère 11 par ledit détecteur 15 d'ondes radio lorsqu'il est alimenté par la batterie 14 sur détection de mouvements du terminal par le détecteur 20' de vibrations et lorsqu'il détecte une ondes radio à la fréquence F.

Le mode de réalisation de la figure 4 permet d'économiser beaucoup d'énergie lorsque le terminal 10' n'est pas utilisé en autorisant l'activation du terminal que lorsqu'une zone de couverture radio est détectée. En effet, le détecteur 20' de vibrations couplé au détecteur 15 d'ondes radio consomme moins d'énergie que l'interface radio 13.

Lorsque le terminal n'est pas en mouvement, seul le détecteur 20' de vibrations est alimenté à partir de la batterie 14.

Dés que le terminal 10' est en mouvement, le détecteur 15 d'ondes radio est alimenté sur la batterie 14.

Si le terminal 10' est en mode veille au moment de la détection, seules les fonctions essentielles pour assurer le service, à savoir l'interface radio 13, sont activées sur détection de présence d'un réseau radio de fréquence F et désactivées sur perte de la connectivité radio.

Si le terminal est allumé et utilisé par l'opérateur au moment de la détection radio, celui-ci est laissé dans l'état sur perte de la connexion radio. La mise en veille se fera à l'initiative de l'utilisateur ou sur temporisation paramétrée.

## Revendications

1. Terminal mobile, comprenant :
- un détecteur (15) d'ondes radiofréquence pour, en cas de détection d'une onde radio de fréquence (F) prédéterminée, envoyer un signal à une carte mère (11) du terminal en vue d'activer ladite carte mère ;
- des moyens (20 ; 20') de détection de mouvements du terminal (10) ;
- des moyens (20 ; 14) d'alimentation automatique pour alimenter le détecteur (15) d'ondes radiofréquence, lesdits moyens d'alimentation étant commandés par les moyens (20 ; 20') de détection de mouvements du terminal.

2. Terminal mobile selon la revendication 1, **caractérisé en ce que** lesdits moyens d'alimentation automatique comprennent une batterie (14) apte à être connectée audit détecteur (15) d'ondes radiofréquence par lesdits moyens (20') de détection de mouvements du terminal (10).

3. Terminal mobile selon la revendication 2, **caractérisé en ce que** ladite batterie (14) est une batterie d'alimentation du terminal (10).

4. Terminal mobile selon l'une des revendications 2 ou 3, **caractérisé en ce que** lesdits moyens de détection de mouvement comprennent un détecteur (20') de vibrations alimenté par ladite batterie (14).

5. Terminal mobile selon la revendication 1, **caractérisé en ce que** lesdits moyens de détection de mouvement comprennent un détecteur (20) de vibrations autonome.

6. Terminal mobile selon la revendication 5, **caractérisé en ce que** ledit détecteur de vibrations autonome est un générateur électrique (20) sur vibrations.

7. Terminal mobile selon l'une quelconque des revendications 1, 5 ou 6, **caractérisé en ce que** lesdits moyens d'alimentation automatique sont constitués par un générateur électrique (20) sur vibrations.

8. Terminal mobile selon l'une quelconque des revendications 1 à 7, comprenant,
- une interface radio (13) pour établir une connexion à un réseau radio,
- un module (12) pour activer ladite interface radio suite à une activation de la carte mère.

## Patentansprüche

1. Mobiles Endgerät, umfassend:
- einen Detektor (15) von Funkfrequenzwellen, um im Falle einer Erfassung einer Funkwelle mit einer vorbestimmten Frequenz (F) ein Signal an ein Motherboard (11) des Endgeräts zu senden, um das Motherboard zu aktivieren;
- Mittel (20; 20') zur Erfassung von Bewegungen des Endgeräts (10);
- Mittel (20; 14) zur automatischen Versorgung, um den Detektor (15) von Funkfrequenzwellen zu versorgen, wobei die Versorgungsmittel von Mitteln (20; 20') zur Erfassung von Bewegungen des Endgeräts gesteuert werden.

2. Mobiles Endgerät nach Anspruch 1, **dadurch gekennzeichnet, dass** die automatischen Versorgungsmittel eine Batterie (14) umfassen, die geeignet ist, an den Detektor (15) von Funkfrequenzwellen durch die Mittel (20') zur Erfassung von Bewegungen des Endgeräts (10) angeschlossen zu werden.

3. Mobiles Endgerät nach Anspruch 2, **dadurch gekennzeichnet, dass** die Batterie (14) eine Batterie zur Versorgung des Endgeräts (10) ist.

4. Mobiles Endgerät nach einem der Ansprüche 2 oder 3, **dadurch gekennzeichnet, dass** die Bewegungserfassungsmittel einen Schwingungsdetektor (20') umfassen, der von der Batterie (14) versorgt wird.

5. Mobiles Endgerät nach Anspruch 1, **dadurch gekennzeichnet, dass** die Bewegungserfassungsmittel einen autonomen Schwingungsdetektor (20) umfassen.

6. Mobiles Endgerät nach Anspruch 5, **dadurch gekennzeichnet, dass** der autonome Schwingungsdetektor ein elektrischer Generator (20) bei Schwingungen ist.

7. Mobiles Endgerät nach einem der Ansprüche 1, 5 oder 6, **dadurch gekennzeichnet, dass** die automatischen Versorgungsmittel von einem elektrischen Generator (20) bei Schwingungen gebildet sind.

8. Mobiles Endgerät nach einem der Ansprüche 1 bis 7, umfassend:
- eine Funkschnittstelle (13), um eine Verbindung mit einem Funknetz herzustellen,
- ein Modul (12), um die Funkschnittstelle nach einer Aktivierung des Motherboards zu aktivieren.

## Claims

1. Mobile terminal, comprising:
- a detector (15) of radiofrequency waves for, in case of detection of a radio wave of predetermined frequency (F), sending a signal to a motherboard (11) of the terminal in order to activate said motherboard;
- means (20; 20') for detecting movements of the terminal (10);
- automatic power supply means (20; 14) for powering the detector (15) of radiofrequency waves, said power supply means being controlled by the means (20; 20') for detecting movements of the terminal.

2. Mobile terminal according to Claim 1, **characterized in that** said automatic power supply means comprise a battery (14) suitable for being connected to said detector (15) of radiofrequency waves by said means (20') for detecting movements of the terminal (10).

3. Mobile terminal according to Claim 2, **characterized in that** said battery (14) is a power supply battery of the terminal (10).

4. Mobile terminal according to one of Claims 2 or 3, **characterized in that** said means for detecting movement comprise a detector (20') of vibrations powered by said battery (14).

5. Mobile terminal according to Claim 1, **characterized in that** said means for detecting movement comprise a standalone vibration detector (20).

6. Mobile terminal according to Claim 5, **characterized in that** said standalone vibration detector is an electrical generator (20) on vibrations.

7. Mobile terminal according to any one of Claims 1, 5 and 6, **characterized in that** said automatic power supply means consist of an electrical generator (20) on vibrations.

8. Mobile terminal according to any one of Claims 1 to 7, comprising,
- a radio interface (13) for establishing a connection to a radio network,
- a module (12) for activating said radio interface following an activation of the motherboard.
